(19) Europäisches Patentamt
European Patent Office
Office européen des brevets

(11) EP 1 602 689 B1

(12) **EUROPEAN PATENT SPECIFICATION**

(45) Date of publication and mention of the grant of the patent:
**04.04.2012 Bulletin 2012/14**

(21) Application number: **04717817.3**

(22) Date of filing: **05.03.2004**

(51) Int Cl.:
***C08L 63/00*** *(2006.01)* ***C08G 59/40*** *(2006.01)*
***C08K 7/00*** *(2006.01)*

(86) International application number:
**PCT/JP2004/002839**

(87) International publication number:
**WO 2004/078843 (16.09.2004 Gazette 2004/38)**

(54) **HIGHLY ELASTIC EPOXY RESIN COMPOSITION**

HOCHELASTISCHE EPOXIDHARZZUSAMMENSETZUNGEN

COMPOSITION DE RESINE EPOXY HAUTEMENT ELASTIQUE

(84) Designated Contracting States:
**DE FR GB**

(30) Priority: **07.03.2003 JP 2003060794**

(43) Date of publication of application:
**07.12.2005 Bulletin 2005/49**

(73) Proprietor: **Adeka Corporation**
**Tokyo 116-8554 (JP)**

(72) Inventors:
- **TAKAHATA, Yoshinori,**
**c/o Asahi Denka Co., Ltd.**
**Arakawa-ku, Tokyo 116-0012 (JP)**
- **MORI, Takahiro,**
**c/o Asahi Denka Co., Ltd.**
**Arakawa-ku, Tokyo 116-0012 (JP)**
- **HIRAKAWA, Setsuko,**
**c/o Asahi Denka Co., Ltd.**
**Arakawa-ku, Tokyo 116-0012 (JP)**
- **SAITO, Seiichi,**
**c/o Asahi Denka Co., Ltd.**
**Arakawa-ku, Tokyo 116-0012 (JP)**

(74) Representative: **Forstmeyer, Dietmar et al**
**BOETERS & LIECK**
**Oberanger 32**
**80331 München (DE)**

(56) References cited:

| | |
|---|---|
| **EP-A- 0 266 986** | **EP-A2- 0 290 860** |
| **JP-A- 11 106 481** | **JP-A- 2001 207 031** |
| **JP-A- 2003 213 081** | **US-A1- 2002 132 955** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 602 689 B1

## Description

### Technical Field

This invention relates to a highly elastic epoxy resin composition containing a polyepoxy compound, a curing agent, a polyhydric phenol compound, and a spherical filler having an elastic modulus of 300 GPa or higher. More particularly, it relates to a highly elastic epoxy resin composition which is loaded with a large quantity of a highly elastic filler and is obtained from a mixture of a polyepoxy compound, a curing agent such as a cyanate compound, and a polyhydric phenol compound preferably by vacuum degassing. The epoxy resin composition is especially suitable for use in prepregs.

### Background of the Invention

In applications to epoxy resin prepregs, epoxy resin compositions having an epoxy resin reinforced with a filler such as glass fiber, alumina or silica have been employed. The state-of-the-art epoxy resin compositions reinforced by these kinds of fillers generally exhibit an elastic modulus of several giga-Pascals.

If a substrate prepared using an epoxy resin composition having an elastic modulus of several giga-Pascals is reduced in thickness to cope with the recent demands for electronic equipment, such as mobile phones, to have a reduced size, thickness and weight, the substrate would be distorted when components are mounted thereon. A highly elastic epoxy resin composition has therefore been demanded because such would not be distorted even with a reduced thickness when components are mounted thereon.

Commonly used curing agents for epoxy resins include polyamine compounds, polyisocyanate compounds, acid anhydrides, and polyhydric phenols. JP-A-54-53197 discloses that a cured product obtained from a polyepoxy compound and a polycyanate compound has an oxazoline ring and a triazine ring and exhibits excellent heat resistance. A polycyanate compound self-trimerizes to form a triazine ring, and an epoxy group reacts with a cyanate group to form an oxazoline ring. However, the cured product does not have high elastic modulus as required of prepregs.

EP 0 266 986 discloses a curable homogeneous solvent-free resin formulation comprising a cyanate ester, an epoxy resin and a thermoplastic polymer having a glass transition temperature (Tg) of at least 150°C, said thermoplastic polymer being selected from the group consisting of polyarylates and polyetherimides.

### Disclosure of the Invention

An object of the present ivnention is to provide an epoxy resin composition having a high elastic modulus.

In the light of the above circumstances, the present inventors have conducted extensive investigations and have found as a result that an epoxy resin composition comprising a polyepoxy compound, a specific curing agent, a polyphenol compound, and a spherical filler having an elastic modulus of 300 GPa or higher exhibits an elastic modulus of 80 GPa or higher. The present invention has been reached based on this finding.

The present invention provides an epoxy resin composition comprising (A) 1% to 10% by weight of a polyepoxy compound, (B) 1% to 10% by weight of a curing agent selected from a cyanate compound and a benzoxazine compound, (C) 0.1% to 5% by weight of a polyhydric phenol compound, and (D) 80% to 97.9% by weight of a spherical filler having an elastic modulus of 300 GPa or higher. The epoxy resin composition has a void of 3% or less.

### Best Mode for Carrying out the Invention

The present invention will be described in detail.

The polyepoxy compound that can be used as component (A) includes glycidyl ethers of polyhydric alcohols, such as ethylene glycol, propylene glycol, 1,2-butanediol, 1,3-butanediol, 1,4-butanediol, 2,2-dimethyl-1,3-propanediol, 1,6-hexanediol, diethylene glycol, glycerol, 1,4-cyclohexanediol, and 1,4-bis(hydroxymethyl)cyclohexane; glycidyl ethers of polyhydric phenols, such as hydroquinone, resorcinol, 4,4'-dihydroxybiphenyl, 2,2-bis(4-hydroxyphenyl)propane, bis (4-hydroxyphenyl)methane, bis(4-hydroxysulfone), 1,1,2,2-tetrakis(4-hydroxyphenyl)ethane, phenol novolak, and cresol novolak; and alicyclic polyepoxy compounds, such as 2,2-bis(3,4-epoxycyclohexyl)propane, 3,4-epoxycyclohexylmethyl-3,4-epoxycyclohexanecarboxylate, 3,4-epoxy-6-methylcyclohexylmethyl-3,4-epoxy-6-methylcyclohexanecarboxylate, vinylcyclohexene diepoxide, limonene diepoxide, dicyclopentadiene diepoxide, 3-(3,4-epoxycyclohexyl)-2,4-dioxaspiro (5,5)-8,9-epoxyundecane, and 3-(glycidyloxyethoxyethyl)-2,4-dioxaspiro(5,5)-8,9-epoxyundecane. The polyepoxy compound is used in an amount of 1% to 10%, preferably 2% to 8%, still preferably 3% to 7%, by weight based on the total epoxy resin composition. At amounts less than 1% by weight, the resulting cured product is brittle. At amounts more than 10% by weight, the elastic modulus is reduced.

In order to reduce the viscosity of the epoxy resin composition while being degassed, an alicyclic epoxy compound represented by formula (I) or (II) shown below is preferred as the polyepoxy compound. It is more preferred that the polyepoxy compound as component (A) contain the alicyclic epoxy compound of formula (I) or (II) in a proportion of at least 50% by weight, even more preferably 70% by weight or more.

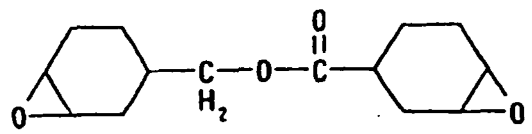

(I)

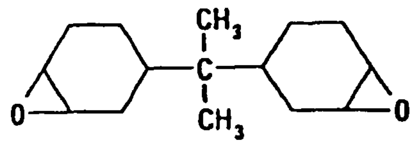

(II)

The cyanate compound that can be used as component (B) is preferably a polycyanate compound. Examples of the polycyanate compound include 1,4-dicyanatobenzene, 1,3-dicyanatobenzene, 1,2-dicyanatobenzene, 2,2-bis(4-cyanatophenyl)propane, 4,4'-dicyanatobiphenyl, 4,4'-dicyanatodiphenyl ether, 4,4'-dicyanatodiphenylmethane, 4,4'-dicyanatodiphenyl sulfone, 4,4'-dicyanatobenzophenone, 1,1-bis(4-cyanatophenyl)cyclohexane, 4,4'-dicyanato-p-terphenyl, 2,6-dicyanatonaphthalene, 2,7-dicyanatonaphthalene, 2,7-dicyanatoanthracene, 1,4-bis(4-cyanatophenyloxy)benzene, 4,4'-bis(4-cyanatophenyloxy)diphenyl ether, 4,4'-bis(3-cyanatophenyloxy)diphenyl ether, 4,4'-bis(3-cyanatophenyloxy)biphenyl, 4,4'-(4-cyanatophenyloxy)benzophenone, 4,4'-(4-cyanatophenyloxy)diphenyl sulfone, and compounds represented by the following formulae, in which n is preferably 1 to 5.

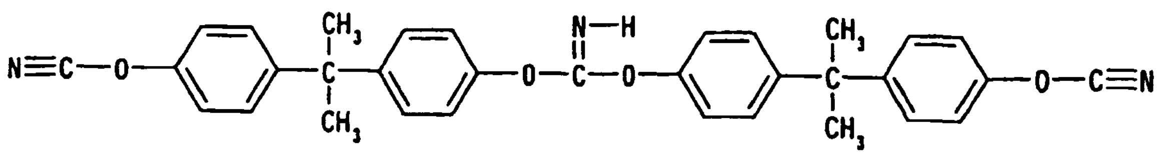

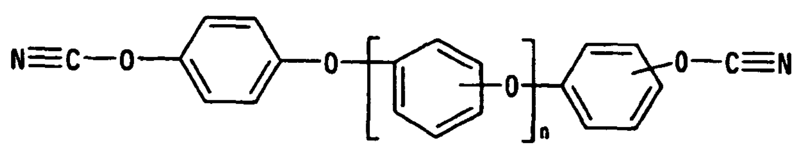

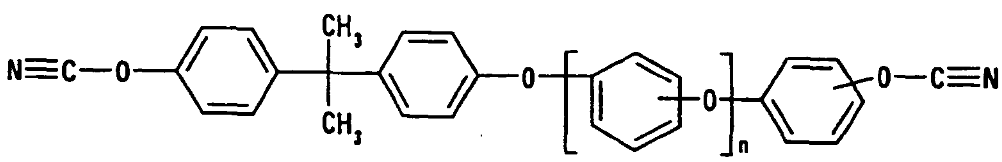

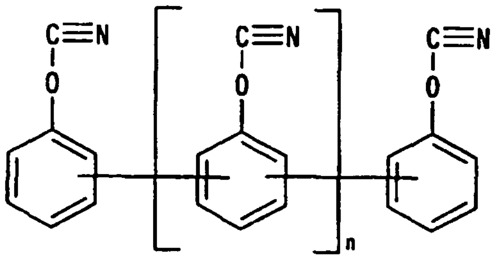

The benzoxazine compound that can be used as component (B) includes 1,1,1-tris(N-phenyl-1,3-benzoxazine) ethane, 1,3-bis(2-(N-phenyl-1,3-benzoxazine)isopropyl) benzene, and a condensation product between N-phenyl-1,3-benzoxazine, benzene, and formaldehyde.

The curing agent selected from the cyanate compound and the oxazine compound is used in an amount of 1% to 10%, preferably 2% to 8%, more preferably 3% to 7%, by weight based on the total epoxy resin composition of the present invention. At amounts smaller than 1% by weight, the cured product is brittle. At amounts larger than 10% by weight, the elastic modulus is reduced.

The polyhydric phenol compound that can be used as component (C) includes 2,2'-dihydroxybiphenyl, 4,4'-dihydroxybiphenyl, 1,6-dihydroxynaphthalene, and phenol novolak. Preferred of them is 2,2'-dihydroxybiphenyl for its contribution to low viscosity. The polyhydric phenol compound is used in an amount of 0.1% to 5% by weight, preferably 0.1% to 3% by weight, still preferably 0.2% to 3% by weight, based on the total epoxy resin composition of the present invention. At amounts less than 0.1% by weight, the epoxy resin composition as compounded has a high viscosity so that the void remains high even after degassing. It follows that the resulting cured product has a low elastic modulus. If the polyhydric phenol compound is used in an amount exceeding 5% by weight, crosslinking in the curing reaction is insufficient only to provide a cured product with an insufficient elastic modulus.

The filler that can be used as component (D) includes aluminum oxide (alumina), aluminum nitride, crystalline silica, and silicon nitride, with alumina being preferred. While the process of preparing the filler is not particularly limited, the filler particles should have a spherical shape, preferably a true spherical shape, so that the physical properties of the resulting epoxy composition may not vary depending on the direction.

The filler is used in an amount of 80% to 97.9%, preferably 85% to 95%, still preferably 90% to 95%, by weight based on the total epoxy resin composition of the present invention. At amounts less than 80% by weight, the resulting cured product has a low elastic modulus. At amounts more than 97.9% by weight, the cured product is brittle.

The compounding ratio of component (A) to component (B) (polyepoxy compound/curing agent) is preferably such that the ratio of the number of the functional groups of the polyepoxy compound as component (A) to the number of the functional groups of the curing agent as component (B) ranges from 0.9 to 1.1, still preferably 0.98 to 1.02, with the filler used in an amount of 80% to 97.9% by weight based on the total epoxy resin composition.

If desired, a flame retardant is preferably incorporated into the epoxy resin composition of the present invention. Useful flame retardants include additive halogen flame retardants such as decabromodiphenyl ether; reactive halogen flame retardants such as tetrabromobisphenol A; phosphorus flame retardants such as phosphoric esters obtained by the reaction between a polyhydric phenol (e.g., resorcinol or bisphenol A), a monophenol (e.g., phenol or 2,6-dimethylphenol), and phosphorus oxychloride and phosphoric amide compounds obtained by the reaction between m-xylylenediamine and diphenylphosphoric chloride; nitrogen-containing flame retardants such as melamine cyanurate; and antimony flame retardants. Phosphorus flame retardants are preferred for the small environmental burden. A phosphoric amide compound represented by formula (III) shown below, which has reactivity with an epoxy resin, is particularly preferred.

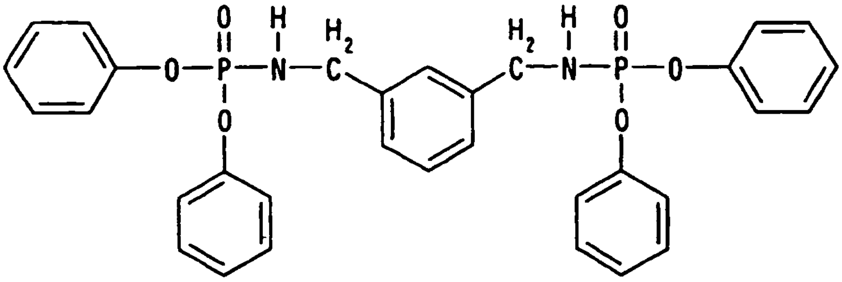

(III)

If desired, the epoxy resin composition of the present invention can contain optional components, such as an antioxidant, an ultraviolet absorber, a hindered amine stabilizer, and a leveling agent.

The epoxy resin composition of the invention has a void of 3% or less, preferably 1% or less. In particular, the epoxy resin composition of the invention which is obtained by mixing the above-described essential components and optional components, melting the mixture by heating, and degassing the molten mixture under reduced pressure has a small void and therefore provides a cured product with excellent elastic modulus. The heating temperature must be lower than the curing temperature and is preferably at or above the melting points of components other than the filler, particularly components (A) and (B). It is desirable that the epoxy resin composition to be subjected to degassing processing have a low viscosity and therefore be kept at or above the melting point of each component other than the filler. The temperature of the composition to be degassed does not always need to be at or above the melting points of those components the amounts of which are small, such as the optional components. The viscosity of the epoxy resin composition to be degassed is preferably 100 ps or lower. If curing occurs before or during degassing processing, the effects of degassing are not obtained. Hence, it is indispensable to treat the epoxy resin composition at temperatures lower than the thermal curing temperature, preferably lower by at least 10°C. Degassing processing is preferably carried out at reduced pressure of 1 mmTorr or lower.

Applications of the epoxy resin composition of the present invention are not restricted. The epoxy resin composition is especially suited for use in prepregs.

The present invention will now be illustrated in greater detail with reference to Examples and Comparative Examples, but it should be understood that the invention is not construed as being limited thereto.

EXAMPLES 1 TO 5 AND COMPARATIVE EXAMPLES 1 TO 6

A clay-like epoxy resin composition was prepared according to the formulation shown in Tables 1 and 2 below by use of a three-roll mill. The viscosity of the resulting epoxy resin composition was measured at 80°C. The epoxy resin composition was melted in an alumina container at 110°C and shaken for 10 minutes. The atmosphere was evacuated to 0.6 mmTorr, at which the composition was maintained for 15 minutes. Thereafter, the epoxy resin composition was measured for mass and volume (V1). The volume (V1) was measured by curing the epoxy resin composition and sinking the cured product in a water bath. A void was calculated from the measured volume (V1) and a theoretical volume (V0) of the epoxy resin composition which is obtained from the specific gravity of the filler, the specific gravity of the resin, and the compounding ratio in accordance with the following equation. The measured viscosity and the calculated void are shown in Tables 1 and 2.

$$\text{Void (\%)} = [(V1-V0)/V1] \times 100$$

The vacuum-heated epoxy resin composition was maintained at 180°C for 1 hour, 200°C for 1 hour, and then 220°C for 1 hour to cure. The resulting cured product was analyzed for elastic modulus, glass transition temperature, linear expansion coefficient, and water absorption as follows. The results obtained are shown in Tables 1 and 2.

1) Elastic modulus

Measured in accordance with JIS K7198.

2) Glass transition temperature (Tg) (°C)

Measured by a dynamic viscoelasticity method.

3) Linear expansion coefficient (ppm)

A specimen measuring 2 cm wide and 10 cm long was cut out of a cured product at room temperature with the length direction coinciding with the direction of application. The ratio of the length at 30°C to the length at 100°C and the ratio of the length at 160°C to the length at 200°C were measured as a linear expansion coefficient.

4) Water absorption (%)

A cured product was immersed in distilled water at room temperature for 24 hours. The weight gain was taken as a water absorption.

The compounds used in the formulations (*1 to *11 in Table 1) are shown below.

*1:

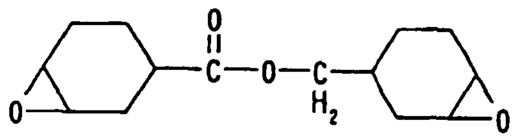

*2:

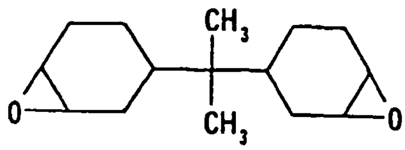

*3:

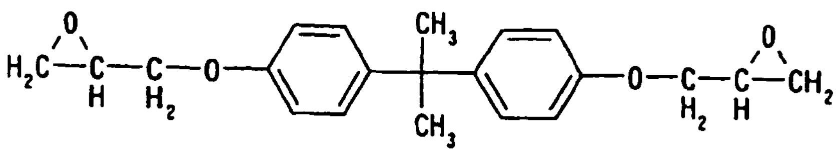

*4:

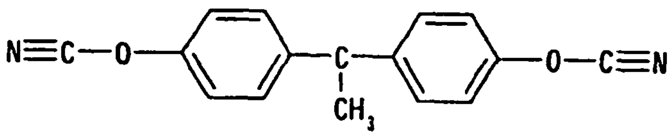

*5:

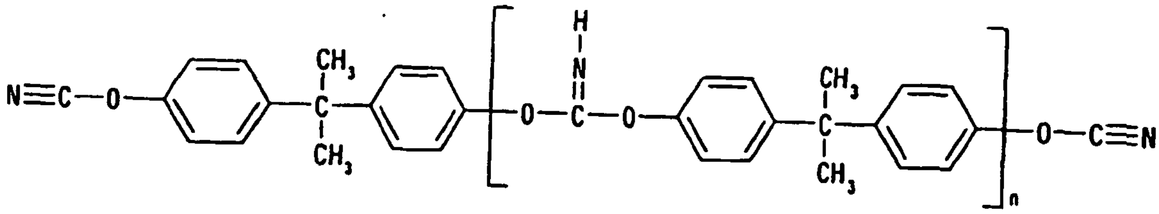

n = 3

*6:

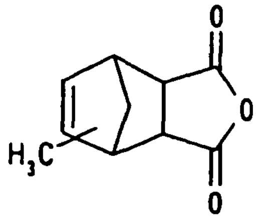

*7:

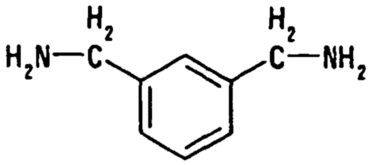

*8:

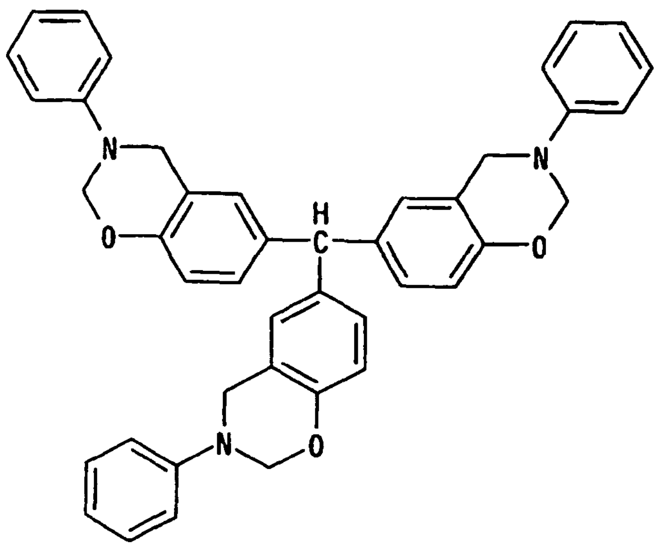

*9: Ethylene glycol butyl ether acetate

* 10: AO-800 (available from Admatechs Co., Ltd.; elastic modulus: ca. 350 GPa)
* 11: SO-E5 (available from Admatechs Co., Ltd.; elastic modulus: ca. 100 GPa)

TABLE 1

| | | Example No. | | | | |
|---|---|---|---|---|---|---|
| | | 1 | 2 | 3 | 4 | 5 |
| Compound No. 1*1 | | 3.6 | | | 5.0 | 1.6 |
| Compound No. 2*2 | | | | 5.8 | | |
| Compound No. 3*3 | | | 3.6 | | | |
| Cyanate 1*4 | | 3.6 | 3.6 | 8.0 | | |
| Cyanate 2*5 | | | | | | 8.1 |
| Acid Anhydride*6 | | | | | | |
| Xylylenediamine*7 | | | | | | |
| Benzoxazine*8 | | | | | 2.5 | |
| 2,2'-Dihydroxybiphenyl | | 0.3 | 0.5 | 1.2 | 2.5 | 0.3 |
| Solvent*9 | | | | | | |
| Spherical Alumina*10 | | 92.5 | 92.5 | 85.0 | 90.0 | 90.0 |
| Spherical Silica*11 | | | | | | |
| Degassing | | yes | yes | yes | yes | yes |
| Viscosity (ps) | | 69 | 83 | 60 | 65 | 75 |
| Void (%) | | 0.46 | 1.51 | 0.41 | 0.55 | 0.52 |
| Elastic Modulus (GPa) | | 100.9 | 95.7 | 92.5 | 99.0 | 99.2 |
| Tg (°C) | | 219 | 190 | 260 | 214 | 220 |
| Linear Expansion coefficient | 30°C-100°C | 9.4 | 9.5 | 13.2 | 11.5 | 11.2 |
| | 160°C-200°C | 37 | 38 | 42.1 | 39.8 | 38.9 |
| Water Absorption (%) | | 0.047 | 0.0091 | 0.055 | 0.051 | 0.049 |

TABLE2

| | Comparative Example No. | | | | | |
|---|---|---|---|---|---|---|
| | 1 | 2 | 3 | 4 | 5 | 6 |
| Compound No. 1 | 3.6 | 2.5 | 3.9 | 3.6 | 5.3 | 3.6 |
| Compound No. 2 | | | | | | |
| Compound No. 3 | | | | | | |
| Cyanate 1 | 3.6 | 2.5 | | 3.6 | | 3.6 |
| Cyanate 2 | | | | | | |
| Acid Anhydride | | | 1.8 | | | |
| Xylylenediamine | | | | | 1.1 | |
| Benzoxazine | | | | | | |
| 2,2'-Dihydroxybiphenyl | 0.3 | | 1.8 | 0.3 | 1.1 | 0.3 |
| Solvent | | | | | | 10 |

(continued)

| | | Comparative Example No. | | | | | |
|---|---|---|---|---|---|---|---|
| | | 1 | 2 | 3 | 4 | 5 | 6 |
| Spherical Alumina | | 92.5 | 95.0 | 92.5 | | 92.5 | 92.5 |
| Spherical Silica | | | | | 92.5 | | |
| Degassing | | no | yes | yes | yes | yes | yes |
| Viscosity (ps) | | 72 | 145 | 2250 | 63 | 3510 | 58 |
| Void (%) | | 9.43 | 6.86 | 12.5 | 0.43 | 11.8 | 6.8 |
| Elastic Modulus (GPa) | | 37.9 | 60.4 | 15.5 | 65.4 | 20.6 | 57.1 |
| Tg (°C) | | 210 | 190 | 160 | 195 | 150 | 200 |
| Linear Expansion Coefficient (ppm) | 30°C-100°C | 18.0 | 9.0 | 26 | 21 | 35 | 17 |
| | 160°C-200°C | 451 | 35 | 58 | 53 | 79 | 50 |
| Water Absorption (%) | | 0.63 | 0.52 | 0.82 | 0.092 | 0.88 | 0.082 |

Comparison between Example 1 and Comparative Example 1 clearly reveals that degassing treatment to reduce the void volume results in improvement in elastic modulus of a cured product. Comparison between Example 1 and Comparative Example 2 clearly demonstrates that addition of a polyhydric phenol compound results in a reduced viscosity, which makes the degassing processing more effective in reducing the void. Comparing Example 1 and Comparative Examples 3 and 5, it can be seen that the comparative composition containing an acid anhydride or polyamine curing agent in place of the cyanate compound or benzoxazine compound has a high void even after degassed on account of its high viscosity, only to provide a cured product with a small elastic modulus. When the spherical alumina having a high elastic modulus is replaced with spherical silica having a low elastic modulus, the elastic modulus apparently appreciably reduces as is apparent from Example 1 and Comparative Example 4. It is also apparent from the results of Comparative Example 6 that the formulation containing the conventional solvent has a low viscosity but a high void before curing only to provide a cured product with a reduced elastic modulus. Thus, the epoxy resin composition according to the present invention which contains 80% by weight or more of a filler having a high elastic modulus and a specific curing agent provides a cured product with an excellent elastic modulus.

Industrial Applicability

The present invention provides an epoxy resin composition which has a high elastic modulus and therefore makes it feasible to reduce the weight and the thickness of prepregs, which would lead to reduction in size and weight of PDAs, mobile phones, mobile computers, etc.

## Claims

1. An epoxy resin composition which comprises (A) 1% to 10% by weight of a polyepoxy compound, (B) 1% to 10% by weight of a curing agent selected from a cyanate compound and a benzoxazine compound, (C) 0.1% to 5% by weight of a polyhydric phenol compound, and (D) 80% to 97.9% by weight of a spherical filler having an elastic modulus of 300 GPa or higher, and wherein the epoxy resin composition has a void of 3% or less.

2. The epoxy resin composition according to claim 1, having a void of 1% or less.

3. The epoxy resin composition according to claim 1 or 2, which is obtained by mixing the components (A), (B), (C), and (D) and degassing the mixture by heating under reduced pressure.

4. The epoxy resin composition according to claim 3, wherein the degassing is carried out by heating the mixture at or above the melting points of the components (A) and (B) and below the curing temperature of the epoxy resin and evacuating to 1 mmTorr or lower.

5. The epoxy resin composition according to any one of claims 1 to 4, wherein the component (B) is a polycyanate

compound.

6. The epoxy resin composition according to any one of claims 1 to 4, wherein the component (B) is a benzoxazine compound.

7. The epoxy resin composition according to any one of claims 1 to 6, wherein the component (A) comprises 50% by weight or more of an epoxy compound represented by formula (I):

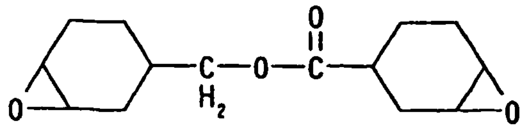

(I)

8. The epoxy resin composition according to any one of claims 1 to 6, wherein the component (A) comprises 50% by weight or more of an epoxy compound represented by formula (II):

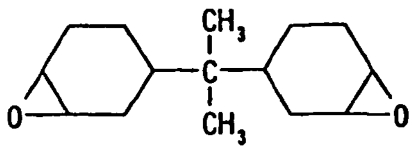

(II)

9. The epoxy resin composition according to any one of claims 1 to 8, wherein the component (D) is alumina.

10. A prepreg comprising the epoxy resin composition according to any one of claims 1 to 9.

**Patentansprüche**

1. Epoxidharz-Zusammensetzung, welche umfasst: (A) 1 Gew.-% bis 10 Gew.-% einer Polyepoxid-Verbindung, (B) 1 Gew.-% bis 10 Gew.-% eines Härtungsmittels, das aus einer Cyanatverbindung und einer Benzoxazinverbindung ausgewählt wird, (C) 0,1 Gew.-% bis 5 Gew.-% einer mehrwertigen Phenolverbindung, und (D) 80 Gew.-% bis 97,9 Gew.-% eines kugelförmigen Füllstoffs mit einem Elastizitätsmodul von 300 GPa oder mehr, und wobei die Epoxidharz-Zusammensetzung einen leeren Raum von 3 % oder weniger aufweist.

2. Epoxidharz-Zusammensetzung nach Anspruch 1 mit einem leeren Raum von 1 % oder weniger.

3. Epoxidharz-Zusammensetzung nach Anspruch 1 oder 2, welche durch Mischen der Bestandteile (A), (B), (C), und (D) und Entgasen der Mischung durch Erhitzen unter vermindertem Druck erhalten wird.

4. Epoxidharz-Zusammensetzung nach Anspruch 3, wobei das Entgasen durchgeführt wird, indem die Mischung auf die oder oberhalb der Schmelzpunkte der Bestandteile (A) und (B) und unterhalb der Härtungstemperatur des Epoxidharzes erhitzt und bei 1 mm Hg oder weniger evakuiert wird.

5. Epoxidharz-Zusammensetzung nach einem der Ansprüche 1 bis 4, wobei der Bestandteil (B) eine Polycyanatverbindung darstellt.

6. Epoxidharz-Zusammensetzung nach einem der Ansprüche 1 bis 4, wobei der Bestandteil (B) eine Benzoxazinverbindung darstellt.

7. Epoxidharz-Zusammensetzung nach einem der Ansprüche 1 bis 6, wobei der Bestandteil (A) 50 Gew.-% oder mehr einer Epoxidverbindung umfasst, die durch die Formel (I) dargestellt wird:

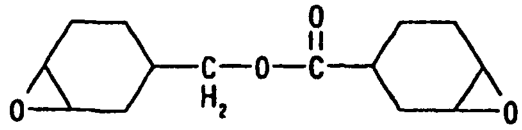

(I)

8. Epoxidharz-Zusammensetzung nach einem der Ansprüche 1 bis 6, wobei der Bestandteil (A) 50 Gew.-% oder mehr einer Epoxidverbindung umfasst, die durch die Formel (II) dargestellt wird:

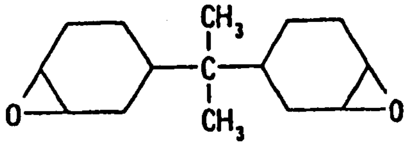

(II)

9. Epoxidharz-Zusammensetzung nach einem der Ansprüche 1 bis 8, wobei der Bestandteil (D) Aluminiumoxid darstellt.

10. Vorimprägnierter Werkstoff, welcher die Epoxidharz-Zusammensetzung nach einem der Ansprüche 1 bis 9 umfasst.

## Revendications

1. Composition de résine époxy qui comprend (A) entre 1% et 10% en poids d'un composé polyépoxy, (B) entre 1% et 10% en poids d'un agent de durcissement choisi parmi un composé cyanate et un composé benzoxazine, (C) entre 0,1% et 5% en poids d'un composé de phénol polyhydrique, et (D) entre 80% et 97,9% en poids d'une charge sphérique ayant un module d'élasticité supérieur ou égal à 300 GPa, et où la composition de résine époxy présente un vide inférieur ou égal à 3 %.

2. Composition de résine époxy selon la revendication 1, ayant un vide inférieur ou égal à 1 %.

3. Composition de résine époxy selon la revendication 1 ou 2, qui est obtenue en mélangeant les composants (A), (B), (C), et (D) et en effectuant un dégazage du mélange par chauffage sous pression réduite.

4. Composition de résine époxy selon la revendication 3, dans laquelle le dégazage est effectué par chauffage du mélange jusqu'aux points de fusion des composants (A) et (B) ou au-dessus de ceux-ci et en-dessous de la température de durcissement de la résine époxy et par évacuation à une pression inférieur ou égale à 1 mm Torr.

5. Composition de résine époxy selon l'une quelconque des revendications 1 à 4, dans laquelle le composant (B) est un composé polycyanate.

6. Composition de résine époxy selon l'une quelconque des revendications 1 à 4, dans laquelle le composant (B) est un composé benzoxazine.

7. Composition de résine époxy selon l'une quelconque des revendications 1 à 6, dans laquelle le composant (A) comprend 50% en poids ou plus de composé époxy représenté par la formule (I) :

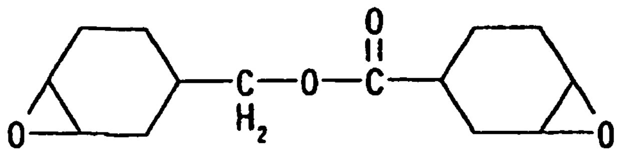

(I)

8. Composition de résine époxy selon l'une quelconque des revendications 1 à 6, dans laquelle le composant (A) comprend 50% en poids ou plus d'un composé époxy représenté par la formule (II) :

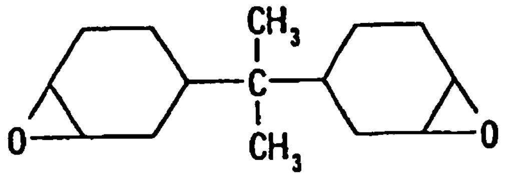

(II)

9. Composition de résine époxy selon l'une quelconque des revendications 1 à 8, dans laquelle le composant (D) est l'alumine.

10. Préimprégné comprenant la composition de résine époxy selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 54053197 A
- EP 0266986 A